# EUROPEAN PATENT APPLICATION

(11) **EP 3 153 977 A1**
(43) Date of publication of application: **12.04.2017**
(21) Application number: 15803675.6
(22) Date of filing: 04.03.2015
(51) Int. Cl.: G06F 17/30, G06Q 30/02

(54) **INFORMATION PROCESSING DEVICE, INFORMATION PRESENTATION METHOD, PROGRAM, AND SYSTEM**

(30) Priority: 03.06.2014 JP 2014114772
(71) Applicant: Sony Corporation, Tokyo 108-0075 (JP)
(72) Inventor: TSUNODA, Tomohiro, Tokyo 108-0075 (JP)
(74) Representative: MFG Patentanwälte Meyer-Wildhagen Meggle-Freund Gerhard PartG mbB
(86) International application number: PCT/JP2015/056426
(87) International publication number: WO 2015/186393

(57) **Abstract**

[Object] To provide an information processing apparatus, information presentation method, program, and system that are capable of recommending items that suit user's needs more while not recommending items already owned by the user.

[Solution] An information processing apparatus includes: a selection unit configured to select at least an item owned by a user as an item that is not to be presented to the user for recommendation, by using a property information storage unit configured to store information on property of the user; and an output unit configured to output item recommendation information from which the selected item that is not to be presented for recommendation is excluded.

## Description

### Technical Field

The present disclosure relates to information processing apparatuses, information presentation methods, programs, and systems.

### Background Art

According to conventional target advertisement systems or conventional recommendation systems, a screen displays and recommends items having high probabilities of being purchased/consumed by a user basically on the basis of online behavior, purchase behavior in an online store, and the like.

For example, Patent Literature 1 describes an electronic commerce system in which a related item is introduced to a user who has purchased a certain item. Specifically, Patent Literature 1 describes a system for presenting related information which is unexpected for a user, while maintaining some relevance to certain information, by repeatedly executing a related information selection step a plurality of times, selecting indirectly related information, and presenting the indirectly related information to a user.

### Citation List

### Patent Literature

Patent Literature 1: JP 2010-26666A

### Summary of Invention

### Technical Problem

However, there is a problem that the conventional systems do not recognize items purchased or consumed by the user offline or in an online store other than the above described online store, and thereby the recommendation of the item same as the item the user has purchased before continues. In addition, in brick-and-mortar stores, it is difficult to take care of users while recognizing items the user has purchased before.

Therefore, the present disclosure proposes an information processing apparatus, information presentation method, program, and system that are capable of recommending items that suit user's needs more while not recommending items already owned by the user.

### Solution to Problem

According to the present disclosure, there is provided an information processing apparatus including: a selection unit configured to select at least an item owned by a user as an item that is not to be presented to the user for recommendation, by using a property information storage unit configured to store information on property of the user; and an output unit configured to output item recommendation information from which the selected item that is not to be presented for recommendation is excluded.

According to the present disclosure, there is provided an information presentation method including: selecting at least an item owned by a user as an item that is not to be presented to the user for recommendation, by using a property information storage unit configured to store information on property of the user; and outputting item recommendation information from which the selected item that is not to be presented for recommendation is excluded.

According to the present disclosure, there is provided a program for causing a computer to function as: a selection unit configured to select at least an item owned by a user as an item that is not to be presented to the user for recommendation, by using a property information storage unit configured to store information on property of the user; and an output unit configured to output item recommendation information from which the selected item that is not to be presented for recommendation is excluded.

According to the present disclosure, there is provided a system including: a server that includes a selection unit configured to select at least an item owned by a user as an item that is not to be presented to the user for recommendation, by using a property information storage unit configured to store information on property of the user, and an output unit configured to output item recommendation information from which the selected item that is not to be presented for recommendation is excluded; and a client that includes a communication unit configured to receive item recommendation information corresponding to identification information of a target user, and a display unit configured to display an item recommendation screen on the basis of the received item recommendation information.

### Advantageous Effects of Invention

As described above, according to the present disclosure, it is possible to recommend items that suit user's needs more while not recommending items already owned by the user.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an overall configuration of a recommendation system according to a first embodiment of the present disclosure.
[FIG. 2] FIG. 2 is a sequence diagram illustrating a property DB generation process according to the first embodiment of the present disclosure.
[FIG. 3] FIG. 3 is a sequence diagram illustrating an item presentation process according to the first embodiment of the present disclosure.
[FIG. 4] FIG. 4 is a diagram illustrating an overall configuration of a recommendation system according to a second embodiment of the present disclosure.
[FIG. 5] FIG. 5 is a sequence diagram illustrating an item presentation process according to the second embodiment of the present disclosure.
[FIG. 6] FIG. 6 is a diagram illustrating an overall configuration of a recommendation system according to a third embodiment of the present disclosure.
[FIG. 7] FIG. 7 is a sequence diagram illustrating an item presentation process according to the third embodiment of the present disclosure.
[FIG. 8] FIG. 8 is a diagram illustrating an example of a hardware configuration of an information processing apparatus that realizes a function of each server.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description is given in the following order.
1. First embodiment
   1-1. Configuration
   1-2. Operation process
2. Second embodiment
   2-1. Configuration
   2-2. Operation process
3. Third embodiment
   3-1. Configuration
   3-2. Operation process
4. Conclusion

### <<1. First embodiment>>

### <1-1. Configuration>

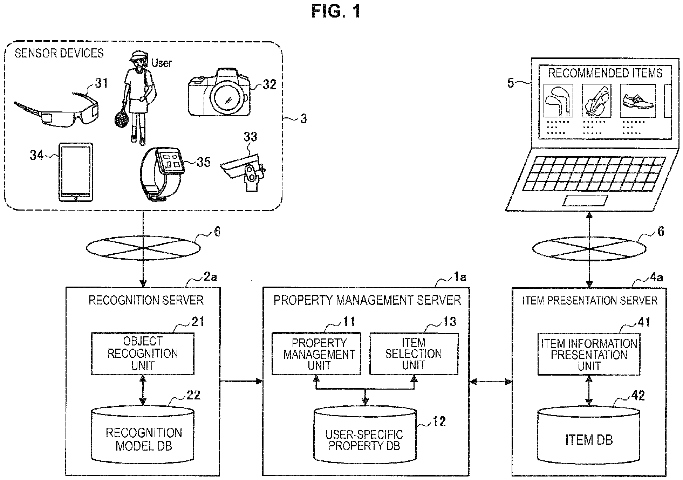

First, with reference to FIG. 1, an overall configuration of a recommendation system according to a first embodiment of the present disclosure will be described. As illustrated in FIG. 1, the recommendation system according to the first embodiment includes various sensor devices 3, a recognition server 2a, a property management server 1a, and an item presentation server 4a. The various sensor devices 3 detect user's behavior. The recognition server 2a recognizes objects owned by the user (hereinafter, also referred to as property) on the basis of sensing data. The property management server 1a manages the property of the user. The item presentation server 4a presents an item to be recommended to the user.

### (Sensor device)

For example, it is assumed that the various sensor devices 3 are wearable apparatuses worn by the user such as a glasses-type HMD 31 and watch-type device 35, mobile terminals (information processing terminals) used by the user such as a digital camera 32 and a smartphone 34, and security cameras (stationary cameras) 33 installed in towns and buildings. Data acquired by the sensor devices 3 is transmitted to the recognition server 2a via a network 6, such as a captured image of the user, purchase information of the user, and sound/images of a scene of the user's purchase. This enables the recognition server 2a to acquire information on the property of the user.

### (Recognition server)

As illustrated in FIG. 1, the recognition server 2a includes an object recognition unit 21 and a recognition model database (DB) 22. The recognition model DB 22 stores model data (parameters, patterns, and the like) used by the object recognition unit 21 for recognizing an object on the basis of the sensing data transmitted from the sensor devices 3. Such model data is general object recognition model.

The object recognition unit 21 recognizes the sensing data transmitted from the sensor devices 3 and recognizes an object owned by the user by using the model data stored in the recognition model DB 22. Specifically, for example, the object recognition unit 21 can recognize an item purchased by the user in a brick-and-mortar shop and goods worn by the user, on the basis of behavior logs and an image of the user. The behavior logs are continuously acquired by a camera provided on the glasses-type HMD 31, and the image is captured by the security camera 33. In this case, the object recognition unit 21 may perform pattern matching with an object extracted from the captured image and recognize a target item by using an object recognition pattern stored in the recognition model DB 22. When recognizing an object on the basis of a captured image, the object recognition unit 21 may use multimodal information such as context information (whether the user is in his/her house, whether the user is in his/her office, whether the user is on a train, or the like) extracted from the captured image, location information, time, and another sensor device, to recognize the object. Thereby, for example, it is determined that objects around the user recognized on the basis of images capturing surroundings of the user are property of the user in the case where the user is in his/her house. On the other hand, it is determined that objects around the user are not property of the user in the case where the user is in his/her office or the user is on the train.

The object recognition unit 21 can also recognize items purchased by the user in online shops on the basis of the user's purchase history through online shopping using the smartphone 34, the watch-type device 35, a PC, and the like.

The object recognition unit 21 transmits, to the property management server 1a, information on the property of the user recognized in such a way.

### (Property management server)

The property management server 1a includes a property management unit 11, user-specific property DB 12, and an item selection unit 13. The property management unit 11 performs a registration/update process on the user-specific property DB 12. For example, the property management unit 11 registers information on the property of the user transmitted from the recognition server 2a in the user-specific property DB 12.

The user-specific property DB 12 is a database (property information storage unit) that stores information on property of each user. For example, the user-specific property DB 12 stores a name of object (property) owned by the user, color of the object, the number of the objects, price of the object, date and time when the object has been purchased, information about whether or not the object is a consumer product, and the like.

The item selection unit 13 selects at least an item owned by the user as an item that is not to be presented to the user for recommendation, by using the user-specific property DB 12 that stores information on the property of the user. The item selection unit 13 may select an item same as the property of the user, an item similar to the property of the user, or an item in a category same as the property of the user, as the item that is not to be presented for recommendation. However, in the case where the user tends to buy an item that is similar to an item (clothes, shoes, or the like) that the user loves but different in color, the item selection unit 13 may exclude items that are similar to the property of the user but different in color, from items that are not to be presented for recommendation.

In a case where the property is a consumer product, the item selection unit 13 may include an item in items that are not to be presented for recommendation before a predetermined time has elapsed since purchase, and the item selection unit 13 may exclude the item from the items that are not to be presented for recommendation after the predetermined time has elapsed. This is because the user may purchase the same item after the user has run out of the item, in the case where the item is a consumer product such as cosmetics or bath powder.

The item selection unit 13 according to the embodiment also functions as an output unit that outputs, to the item presentation server 4a, items other than an item selected as the item that is not to be presented for recommendation in an item list, as a recommendation list (item recommendation information). The item list is transmitted from the item presentation server 4a. In this case, the item selection unit 13 may generate the recommendation list for proactively presenting consumer products for recommendation after a predetermined time has elapsed since purchase.

### (Item presentation server)

The item presentation server 4a includes an item information presentation unit 41 and an item DB 42. The item presentation server 4a is a server corresponding to each shop (online shop or brick-and-mortar shop). Here, the item presentation server 4a is a server corresponding to an online shop where the user access using a laptop PC 5, for example.

The item DB 42 is a database that stores information on items that the item presentation server 4a deals with. For example, the item DB 42 stores item names, item codes, item descriptions, types (categories) of the items, and the like. In the case where the items are consumer products, information on time periods from purchase to when the items run out is also stored.

The item information presentation unit 41 extracts information on an item to be recommended to the user from the item DB 42, and transmits the information to the laptop PC 5 (an example of the client) of the user via the network 6 so that the information is displayed on a screen of the laptop PC 5. More specifically, first, the item information presentation unit 41 according to the embodiment generates an item list by extracting items to be recommended to the user from the item DB 42, and transmits the item list to the property management server 1a. The list of items to be recommended to the user may be generated on the basis of attributes (sex, age, favorites, and the like) of the user or browsing/purchase history of the shop, or may be generated while targeting on all items, for example. Subsequently, when the property management server 1a generates a recommendation list by excluding property of the user from the item list and returns the recommendation list, the item information presentation unit 41 presents items included in the received recommendation list to the client as items to be recommended to the user.

Thereby, items that have already been purchased in other online shops or in brick-and-mortar shops are not displayed as "recommended items" that are presented during browsing online shops by using the laptop PC 5, for example. This enables recommendation of items that suit user's needs more. It is also possible to reduce the user's stress of viewing unnecessary information.

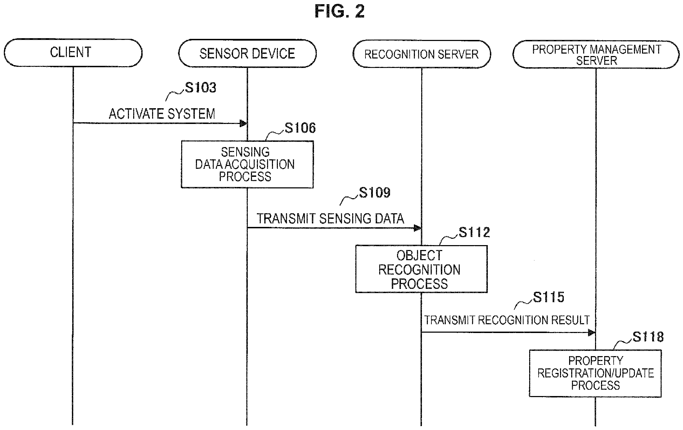

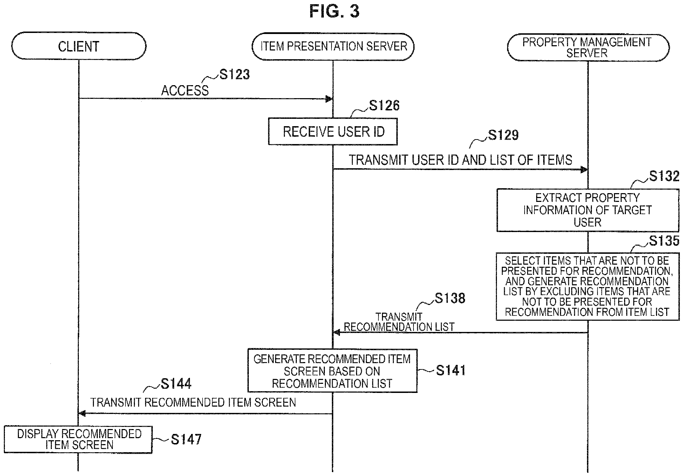

The structural elements of the recommendation system according to the first embodiment of the present disclosure have been described. Next, with reference to FIG. 2 and FIG. 3, an operation process in the recommendation system according to the embodiment will be described.

### <1-2. Operation process>

### (1-2-1. Property DB generation process)

FIG. 2 is a sequence diagram illustrating a property DB generation process according to the first embodiment. As illustrated in FIG. 2, first, in Step S103, the client actively accesses the sensor devices 3 as necessary, and activates the system. The client is a user terminal used by the user. More specifically, for example, in the case where the sensor devices 3 are integrated with the client such as the glasses-type HMD 31, the watch-type device 35, or the smartphone 34, the system is activated (sensing data is acquired) continuously or periodically. Therefore, the process in Step S103 is unnecessary. On the other hand, in the case where the sensor devices 3 are separated from the client such as the security cameras 33, an identification signal or the like is transmitted to the security cameras 33 to activate the system (start acquisition of sensing data).

Next, in Step S106, the sensor devices 3 acquire the sensing data. For example, as the sensing data, the sensor devices 3 acquire captured images, location information, acceleration information, geomagnetic information, time, browsing/purchase histories in online shops, and contents of articles in the user's blog or the like.

Next, in Step S109, the sensor devices 3 transmit the acquired sensing data to the recognition server 2a.

Subsequently, in Step S112, the recognition server 2a performs an object recognition process on the basis of the sensing data received from the sensor devices 3. Specifically, the object recognition unit 21 of the recognition server 2a recognizes objects around the user and objects worn by the user that are in the captured images with reference to the recognition model DB 22. The object recognition unit 21 also recognizes the property of the user by analyzing the browsing/purchase histories, the contents of the articles in the user's blog, or the like.

Next, in Step S115, the recognition server 2a transmits the recognition result (information on the property of the user) to the property management server 1a.

Subsequently, in Step S118, the property management unit 11 of the property management server 1a performs the registration/update process on user-specific property information stored in the user-specific property DB 12 on the basis of the information on the property of the user received from the recognition server 2a.

By continuously repeating the above described processes, property information of the user is accumulated in the user-specific property DB 12.

### (1-2-2. Item presentation process)

Next, with reference to FIG. 3, an item presentation process according to the embodiment will be described. FIG. 3 is a sequence diagram illustrating the item presentation process according to the first embodiment. As illustrated in FIG. 3, first, in Step S123, the client (for example, laptop PC 5 in FIG. 1) accesses the item presentation server 4a, and actively logs in to the item presentation server 4a as necessary. The client is the user terminal used by the user. At this time, the client accesses the item presentation server 4a with transmission of a user ID. For example, in the case where the item presentation server 4a corresponds to an online shop, the access to the item presentation server 4a means browsing of the online shop using the client (laptop PC 5, smartphone, tablet terminal, etc.) In this case, the user logs in to the online shop through a login screen of the online shop.

Sometimes an advertisement from an online shop where the user has recently accessed is displayed in an advertisement column in a web site during browsing the web site other than an online shop corresponding to the item presentation server 4a. In this case, launch of a browser on a client corresponds to indirect access to the item presentation server 4a.

In the case where the item presentation server 4a corresponds to a brick-and-mortar shop, user's visit to the brick-and-mortar shop corresponds to the access. In this case, a client detects the visit to the brick-and-mortar shop, and accesses to the item presentation server 4a corresponding to the brick-and-mortar shop to transmits the user D. Alternatively, a shop terminal installed in the brick-and-mortar shop may acquire the user ID from a membership card shown by the user or the client carried by the user, and access the item presentation server 4a to transmit the user ID.

Next, in Step S126, the item presentation server 4a receives the user ID.

Next, in Step S129, the item presentation server 4a transmits the received user ID and a list of items that the item presentation server 4a's shop deals with, to the property management server 1a. Such a list of items may be a list of all items that the item presentation server 4a's shop deals with, or may be a list of items to be recommended according to the attributes of the user.

Subsequently, in Step S132, the property management unit 11 of the property management server 1a extracts, from the user-specific property DB 12, property information of a target user associated with the user ID transmitted from the item presentation server 4a.

Next, in Step S135, the item selection unit 13 selects items that are not to be presented for recommendation in accordance with the property information of the target user extracted from the user-specific property DB 12, and generates a recommendation list by excluding the selected items that are not to be presented for recommendation from the item list transmitted from the item presentation server 4a.

Next, in Step S138, the item selection unit 13 transmits the generated recommendation list to the item presentation server 4a.

Next, in Step S141, the item information presentation unit 41 in the item presentation server 4a generates a recommended item screen for recommending items in the recommendation list transmitted from the property management server 1a, and in subsequent Step S144, the item information presentation unit 41 transmits the recommended item screen to the client.

Subsequently, in Step S147, the client displays the recommended item screen transmitted from the item presentation server 4a. Thereby, items that the user already has are not presented as the "recommend items". This enables recommendation of items that suit user's needs more. It is also possible to reduce the user's stress of viewing unnecessary information.

In the case of accessing the item presentation server 4a from the shop terminal in the brick-and-mortar shop, the recommended item screen is displayed on the shop terminal. Thereby, shop assistants can recommend items to the user by reference to the recommended item screen displayed on the shop terminal.

In addition, according to the embodiment, the property management server 1a transmits, to the item presentation server 4a, the recommendation list from which items that are not to be presented for recommendation are excluded according to the property information of the user. Thereby, it is possible to avoid transmission of personal information such as the property information of the user to an external server, and security is secured. In addition, it is also possible to avoid presentation of the personal information such as the property information of the user to the shop terminal.

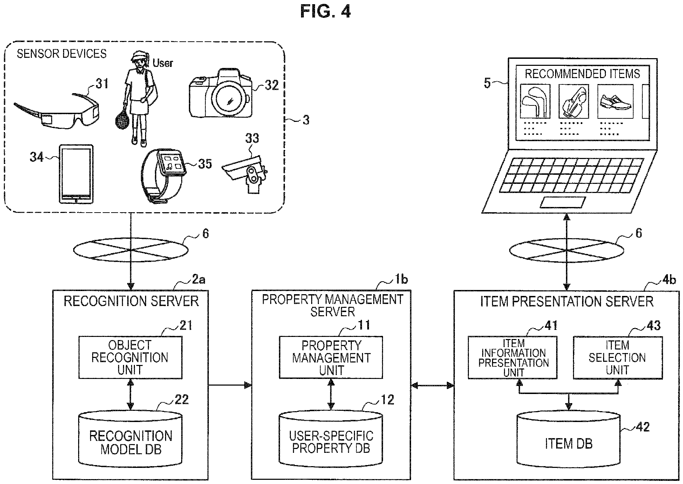

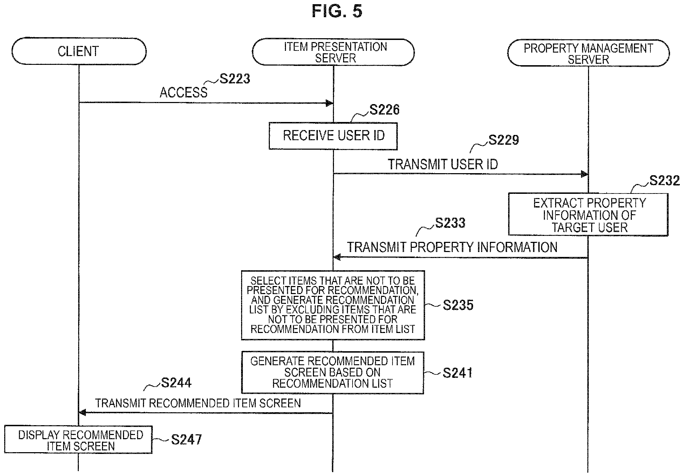

The recommendation system according to the first embodiment has been described in detail. Next, with reference to FIG. 4 and FIG. 5, a recommendation system according to a second embodiment of the present disclosure will be described.

### <<2. Second embodiment>>

### <2-1. Configuration>

FIG. 4 is a diagram illustrating an overall configuration of the recommendation system according to the second embodiment of the present disclosure. As illustrated in FIG. 4, the recommendation system according to the second embodiment includes the various sensor devices 3, the recognition server 2a, a property management server 1b, and an item presentation server 4b. The various sensor devices 3 detect user's behavior. The recognition server 2a recognizes property of the user on the basis of sensing data. The property management server 1b manages the property of the user. The item presentation server 4b presents an item to be recommended to the user.

The sensor devices 3 and the recognition server 2a in the recommendation system according to the second embodiment are similar to the first embodiment described with reference to FIG. 1. Accordingly, repeated description is omitted.

### (Property management server)

As illustrated in FIG. 4, the property management server 1b includes the property management unit 11 and the user-specific property DB 12. In a way similar to the first embodiment, the property management unit 11 performs the registration/update process on the user-specific property DB 12 on the basis of the information on the property of the user transmitted from the recognition server 2a. The user-specific property DB 12 stores information on property of each user.

The property management unit 11 according to the embodiment transmits property information of a target user to the item presentation server 4b in response to a request from the item presentation server 4b.

### (Item presentation server)

As illustrated in FIG. 4, the item presentation server 4b includes the item information presentation unit 41, the item DB 42, and an item selection unit 43. The item selection unit 43 selects at least an item owned by the user as an item that is not to be presented to the user for recommendation, by using information on the property of the user transmitted from the property management server 1b. The item selection unit 13 may select an item same as the property of the user, an item similar to the property of the user, or an item in a category same as the property of the user, as the item that is not to be presented for recommendation. To the item information presentation unit 41, the item selection unit 43 outputs information on the selected item that is not to be presented for recommendation.

The item information presentation unit 41 functions as an output unit that outputs, to a client (for example, laptop PC 5 in FIG. 4), items other than an item that the item selection unit 43 has selected as the item that is not to be presented for recommendation in an item list, as a recommendation list (item recommendation information). The item list is extracted from the item DB 42.

Thereby, items that have already been purchased in other online shops or in brick-and-mortar shops are not displayed as "recommended items" that are presented during browsing online shops by using the laptop PC 5, for example. This enables recommendation of items that suit user's needs more. It is also possible to reduce the user's stress of viewing unnecessary information.

The overall configuration of the recommendation system according to the second embodiment of the present disclosure has been described. As illustrated in FIG. 4, the recommendation system according to the second embodiment is different from the recommendation system according to the first embodiment in that the item presentation server 4b includes the item selection unit 43. The item presentation server 4b according to the second embodiment can generate an item list by using property information corresponding to a target user received from the item presentation server 4b without transmitting the item list to the property management server 1b. Next, with reference to FIG. 5, an operation process in the recommendation system according to the embodiment will be described.

### <2-2. Operation process>

In a way similar to the first embodiment, information on the property of the user is continuously acquired and the user-specific property DB 12 is generated in the recommendation system according to the second embodiment. A user-specific property DB 12 generation process is similar to the first embodiment described with reference to FIG. 2. Accordingly, repeated description is omitted.

Next, with reference to FIG. 5, an item presentation process according to the embodiment will be described. FIG. 5 is a sequence diagram illustrating the item presentation process according to the second embodiment. As illustrated in FIG. 5, first, in Step S223, a client (for example, laptop PC 5 in FIG. 1) accesses the item presentation server 4a, and actively logs in to the item presentation server 4a as necessary. The client is the user terminal used by the user. At this time, the client accesses the item presentation server 4a with transmission of a user ID. A specific example of the access to the item presentation server 4b is similar to S123 described with reference to FIG. 3 in the first embodiment.

Next, in Step S226, the item presentation server 4b receives the user ID.

Next, in Step S229, the item presentation server 4b transmits the received user ID to the property management server 1b.

Subsequently, in Step S232, the property management unit 11 of the property management server 1b extracts, from the user-specific property DB 12, property information of a target user associated with the user ID transmitted from the item presentation server 4a. In subsequent Step S233, the property management unit 11 transmits the property information to the item presentation server 4b.

Next, in Step S235, the item selection unit 43 in the item presentation server 4b selects an item that is not to be presented for recommendation in accordance with the property information of the target user transmitted from the property management server 1b, and outputs the selected item to the item information presentation unit 41. The item information presentation unit 41 generates a recommendation list by excluding the item selected by the item selection unit 43 that is not to be presented for recommendation from the item list extracted from the item DB 42. The item list extracted from the item DB 42 may be a list of all items that the item presentation server 4b's shop deals with, or may be a list of items to be recommended according to the attributes of the user.

Next, in Step S241, the item information presentation unit 41 generates a recommended item screen for recommending items in the generated recommendation list, and in subsequent Step S244, the item information presentation unit 41 transmits the recommended item screen to the client.

Subsequently, in Step S247, the client displays the recommended item screen transmitted from the item presentation server 4b. Thereby, items that the user already has are not presented as the "recommend items". This enables recommendation of items that suit user's needs more. It is also possible to reduce the user's stress of viewing unnecessary information.

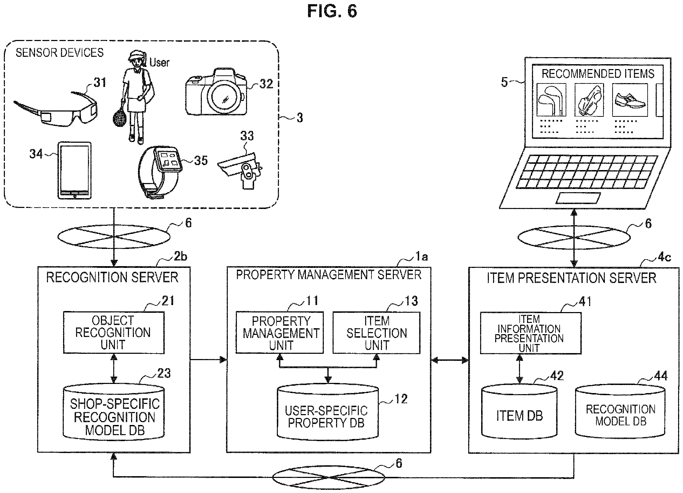

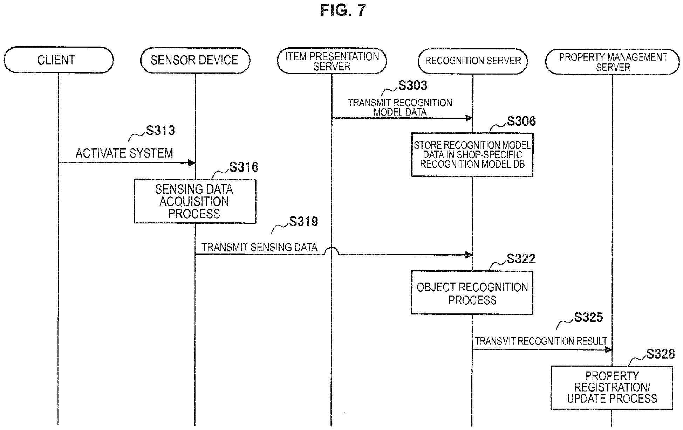

The recommendation system according to the second embodiment has been described in detail. Next, with reference to FIG. 6 and FIG. 7, a recommendation system according to a third embodiment of the present disclosure will be described.

### <<3. Third embodiment>>

### <3-1. Configuration>

FIG. 6 is a diagram illustrating an overall configuration of the recommendation system according to the third embodiment of the present disclosure. As illustrated in FIG. 6, the recommendation system according to the third embodiment includes the various sensor devices 3, a recognition server 2b, the property management server 1a, and an item presentation server 4c. The various sensor devices 3 detect user's behavior. The recognition server 2b recognizes property of the user on the basis of sensing data. The property management server 1a manages the property of the user. The item presentation server 4c presents an item to be recommended to the user.

The sensor devices 3 and the property management server 1a in the recommendation system according to the third embodiment are similar to the first embodiment described with reference to FIG. 1. Accordingly, repeated description is omitted.

### (Recognition server)

The recognition server 2b includes the object recognition unit 21 and a shop-specific recognition model DB 23. The object recognition unit 21 recognizes the sensing data transmitted from the sensor devices 3 and recognizes an object owned by the user by using the model data stored in the shop-specific recognition model DB 23.

The shop-specific recognition model DB 23 is a database that stores recognition model data transmitted as necessary from the item presentation server 4c (to be described later). While the recognition model DB 22 according to the first embodiment is a general object recognition model, the shop-specific recognition model is a dedicated object recognition model specialized for items that each shop deals with. In the example illustrated in FIG. 6, the recognition server 2b includes the shop-specific recognition model DB 23 that stores the recognition model data transmitted from the item presentation server 4c. However, the embodiment is not limited thereto. The recognition server 2b may further include the recognition model DB 22 according to the first embodiment.

### (Item presentation server)

The item presentation server 4c includes the item information presentation unit 41, the item DB 42, and a recognition model DB 44. The item information presentation unit 41 and the item DB 42 in the item presentation server 4c are similar to the structural elements having the same reference numerals according to the first embodiment in FIG. 1. Accordingly, repeated description is omitted.

The recognition model DB 44 is a database that stores model data for recognizing items that each shop deals with. The item presentation server 4c transmits and provides the model data stored in the recognition model DB 44 to the recognition server 2b. A timing of providing the model data stored in the recognition model DB 44 is not specifically limited. For example, the model data is transmitted periodically, when the recognition model DB 44 is updated, when a client accesses the recognition model DB 44, or when the recognition server 2b issues a providing request, for example.

The overall configuration of the recommendation system according to the third embodiment has been described. As illustrated in FIG. 6, the recommendation system according to the third embodiment is different from the recommendation systems according to the first and second embodiments in that the item presentation server 4c includes the recognition model DB 44 dedicated to recognizing items that the item presentation server 4c's store itself deals with. According to the third embodiment, the item presentation server 4c transmits dedicated recognition model data stored in the recognition model DB 44 to the recognition server 2b. Thereby, the recognition server 2b can recognize at least items that the shop corresponding to the item presentation server 4c deals with. Accordingly, it is possible to prevent items that are not included in the property of the user due to recognition failure by general recognition model data, from being recommended to the user. Next, with reference to FIG. 7, an operation process in the recommendation system according to the embodiment will be described.

### <2-2. Operation process>

FIG. 7 is a sequence diagram illustrating a property DB generation process according to the third embodiment. As illustrated in FIG. 7, first, in Step S303, the item presentation server 4c transmits, to the recognition server 2b, dedicated recognition model data stored in the recognition model DB 44.

Next, in Step S306, the recognition server 2b stores the dedicated recognition model data transmitted from the item presentation server 4c, in the shop-specific recognition model DB 23. Thereby, the range of items recognizable by the recognition server 2b becomes specialized to items that the shop corresponding to the item presentation server 4c deals with.

In the subsequent Steps S313 to S328, processes similar to Steps S103 to S118 of the property DB generation process in FIG. 2 according to the first embodiment are performed. The main processes are similar to the first embodiment. In Step S322, the recognition server 2b can recognize the property of the user by referring to the shop-specific recognition model DB 23 at the time of performing the object recognition process based on the sensing data received from the sensor devices 3.

In a way similar to the first embodiment, the item presentation process is also performed in the recommendation system according to the third embodiment. The item presentation process is similar to the first embodiment described with reference to FIG. 3. Accordingly, repeated description is omitted.

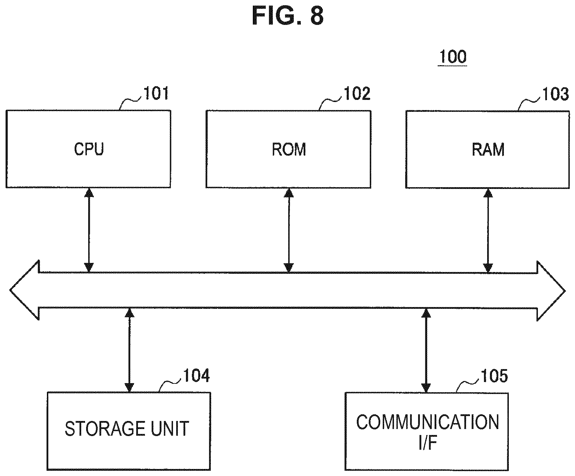

The recommendation systems according to the present disclosure have been described in detail by using the plurality of embodiments. Next, with reference to FIG. 8, hardware configurations of the recognition servers 2a and 2b, the property management servers 1a and 1b, and the item presentation servers 4a, 4b, and 4c will be described. These servers perform the property DB generation processes and the item presentation processes according to the embodiments described above.

### (Information processing apparatus according to embodiments)

FIG. 8 is an example of a hardware configuration of an information processing apparatus 100 capable of achieving the recognition servers 2a and 2b, the property management servers 1a and 1b, and the item presentation servers 4a, 4b, and 4c.

As illustrated in FIG. 8, for example, the information processing apparatus 100 includes a central processing unit (CPU) 101, read only memory (ROM) 102, random access memory (RAM) 103, a storage unit 104, and communication interface (I/F) 105. In the information processing apparatus 100, the structural elements are connected via a bus serving as a data transmission channel, for example.

The CPU 101 is configured by a microcontroller, for example. The CPU 101 controls respective structural elements of the information processing apparatus 100. In the recognition servers 2a and 2b, the CPU 101 functions as the object recognition units 21. In the property management servers 1a and 1b, the CPU 101 functions as the property management units 11 and the item selection units 13. In the item presentation servers 4a to 4c, the CPU 101 functions as the item information presentation units 41 and the item selection units 43.

The ROM 102 stores programs used by the CPU 101, control data such as operation parameters, and the like. The RAM 103 temporarily stores programs and the like executed by the CPU 101, for example.

The storage unit 104 stores various kinds of data. For example, in the recognition servers 2a and 2b, the storage unit 104 serves as the recognition model DBs 22 and the shop-specific recognition model DBs 23. In the property management servers 1a and 1b, the storage unit 104 serves as the user-specific property DBs 12. In the item presentation servers 4a to 4c, the storage unit 104 serves as the item DBs 42 and the recognition model DBs 44.

The communication I/F 105 is a communication means included in the information processing apparatus 100, and communicates with an external apparatus via a network (or directly). The external apparatus constitutes the recommendation system according to each of the embodiments. For example, in the recognition servers 2a and 2b, the communication I/F 105 transmits and receives data to and from the sensor devices 3 via the network 6, and transmits and receives data to and from the property management server 1a directly or via the network 6.

In the property management server 1a, the communication I/F 105 may function as a part of the item selection unit 13 that outputs the recommendation list to the item presentation server 4a. The recommendation list is obtained by excluding the property of the user from the item list. In the item presentation server 4a, the communication I/F 105 may function as a part of the item information presentation unit 41 that transmits the recommended item screen to the client.

In the property management server 1b, the communication I/F 105 may function as a part of the property management unit 11 that outputs the information on the property of the user to the item presentation server 4b.

The hardware configuration of the information processing apparatus 100 according to each of the embodiments has been described. Note that, the configuration of the information processing apparatus 100 according to each of the embodiments is not limited to the configuration illustrated in FIG. 8.

### <<4. Conclusion>>

As described above, by using the recommendation system according to the embodiments of the present disclosure, it is possible to prevent items that a user already has from being presented as "recommended items". This enables recommendation of items that suit user's needs more. It is also possible to reduce the user's stress of viewing unnecessary information.

In addition, it is possible to increase purchase probability by excluding items the user has already purchased from the recommendation list.

In addition, according to the third embodiment, it is possible to narrow the range to be recognized by the recognition server 2b by providing, to the recognition server 2b, dedicated recognition model data specialized for items that the item presentation server 4s is going to provide. This enables load on the recognition server 2b to be reduced, and recognition speed to be increased.

As described above, it is possible to identify information or items that the user has actually purchased/used by using the recognition technology (such as object, video, image, sound, or text recognition), and the actually used items are not presented for advertisement or recommendation.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is also possible to create a computer program for causing a hardware such as the CPU, ROM, and RAM, which are embedded in each of the recognition servers 2a and 2b, the property management servers 1a and 1b, and the item presentation servers 4a to 4c, to execute the functions of the recognition servers 2a and 2b, the property management servers 1a and 1b, and the item presentation servers 4a to 4c. Moreover, it may be possible to provide a computer-readable storage medium having the computer program stored therein.

The configuration of each of the recommendation systems in FIG. 1, FIG. 4, and FIG. 6 is a mere example. The structural elements of the recommendation system according to each of the embodiments are not limited thereto. For example, the sensor device 3 may include the object recognition unit 21, the recognition model DB 22, or the shop-specific recognition model DB 23. In this case, the sensor device 3 recognizes an object, and transmits a result of the recognition to the property management servers 1a and 1b only in the case of matching. Thereby, an object can be tracked even in the case of the object recognized offline. In addition, in this system, the sensor device 3 communicates with the server only in the case of matching.

In the second embodiment, the item selection unit 43 is provided in the item presentation server 4b. However, the configuration of the recommendation system according to the present disclosure is not limited thereto. The function of the item selection unit 43 may be provided in a client. In this case, the client (for example, laptop PC 5) receives an item list from the item presentation server 4, and receives information on property of a user form the property management server 1. Next, the client selects an item that is not to be presented for recommendation in accordance with the information of the property of the user, and generates a recommendation list (item recommendation information) by excluding the item that is not to be presented for recommendation from the item list. Subsequently, the client recommends items on the basis of the recommendation list from which the item that is not to be presented for recommendation is excluded. This enables recommendation of items other than the item that the user already has.

In the embodiments described above, it has been described that the items other than the property of the user are presented when the items are recommended to the user. However, the recommendation systems according to the present disclosure are not limited thereto. For example, when items are recommended to a user, items other than property of another user may be presented. This enables presentation for recommendation that suits the another user's needs more when the user wants to purchase a present for the another user.

Alternatively, the property management server 1 according to each of the embodiments may register, in the user-specific property DB 12, information that an item purchased by a user is highly possible to be an object that the user already has on the basis of the user's purchase experience such as information on passage through a register (POS system) in a brick-and-mortar shop, or information that a purchase procedure has been executed in a virtual shop on the Internet.

Further, the effects described in this specification are merely illustrative or exemplified effects, and are not limitative. That is, with or in the place of the above effects, the technology according to the present disclosure may achieve other effects that are clear to those skilled in the art based on the description of this specification.

Additionally, the present technology may also be configured as below.
(1) An information processing apparatus including:
   a selection unit configured to select at least an item owned by a user as an item that is not to be presented to the user for recommendation, by using a property information storage unit configured to store information on property of the user; and
   an output unit configured to output item recommendation information from which the selected item that is not to be presented for recommendation is excluded.
(2) The information processing apparatus according to (1),
   wherein the selection unit selects an item similar to the item owned by the user or an item in a category same as the item owned by the user, as the item that is not to be presented for recommendation.
(3) The information processing apparatus according to (1) or (2),
   wherein, in a case where the item owned by the user is a consumer product, the selection unit includes the item in items that are not to be presented for recommendation before a predetermined time has elapsed since purchase, and the selection unit excludes the item from the items that are not to be presented for recommendation after the predetermined time has elapsed.
(4) The information processing apparatus according to any one of (1) to (3),
   wherein the selection unit excludes an item that is similar to the item owned by the user but different in color, from items that are not to be presented for recommendation.
(5) The information processing apparatus according to any one of (1) to (4),
   wherein the property information storage unit stores information on the property of the user recognized on the basis of various kinds of sensing data obtained by detecting surroundings of the user.
(6) The information processing apparatus according to (5),
   wherein the various kinds of sensing data include image or audio data obtained by detection performed by a wearable apparatus worn by the user, an information processing terminal carried by the user, or a stationary camera installed around the user.
(7) An information presentation method including:
   selecting at least an item owned by a user as an item that is not to be presented to the user for recommendation, by using a property information storage unit configured to store information on property of the user; and
   outputting item recommendation information from which the selected item that is not to be presented for recommendation is excluded.
(8) A program for causing a computer to function as:
   a selection unit configured to select at least an item owned by a user as an item that is not to be presented to the user for recommendation, by using a property information storage unit configured to store information on property of the user; and
   an output unit configured to output item recommendation information from which the selected item that is not to be presented for recommendation is excluded.
(9) A system including:
   a server that includes
      a selection unit configured to select at least an item owned by a user as an item that is not to be presented to the user for recommendation, by using a property information storage unit configured to store information on property of the user, and
      an output unit configured to output item recommendation information from which the selected item that is not to be presented for recommendation is excluded; and
   a client that includes
      a communication unit configured to receive item recommendation information corresponding to identification information of a target user, and
      a display unit configured to display an item recommendation screen on the basis of the received item recommendation information.

### Reference Signs List

- 1, 1a, 1b: property management server
- 11: property management unit
- 12: user-specific property DB
- 13: item selection unit
- 2, 2a, 2b: recognition server
- 21: object recognition unit
- 22: recognition model DB
- 23: shop-specific recognition model DB
- 3: sensor device
- 31: glasses-type HMD
- 32: digital camera
- 33: security camera
- 34: smartphone
- 35: watch-type device
- 4, 4a, 4b, 4c: item presentation server
- 41: item information presentation unit
- 42: item DB
- 43: item selection unit
- 44: recognition model DB
- 5: laptop PC
- 6: network
- 100: information processing apparatus
- 101: CPU
- 102: ROM
- 103: RAM
- 104: storage unit
- 105: communication I/F

## Claims

1. An information processing apparatus comprising:
a selection unit configured to select at least an item owned by a user as an item that is not to be presented to the user for recommendation, by using a property information storage unit configured to store information on property of the user; and
an output unit configured to output item recommendation information from which the selected item that is not to be presented for recommendation is excluded.

2. The information processing apparatus according to claim 1,
wherein the selection unit selects an item similar to the item owned by the user or an item in a category same as the item owned by the user, as the item that is not to be presented for recommendation.

3. The information processing apparatus according to claim 1,
wherein, in a case where the item owned by the user is a consumer product, the selection unit includes the item in items that are not to be presented for recommendation before a predetermined time has elapsed since purchase, and the selection unit excludes the item from the items that are not to be presented for recommendation after the predetermined time has elapsed.

4. The information processing apparatus according to claim 1,
wherein the selection unit excludes an item that is similar to the item owned by the user but different in color, from items that are not to be presented for recommendation.

5. The information processing apparatus according to claim 1,
wherein the property information storage unit stores information on the property of the user recognized on the basis of various kinds of sensing data obtained by detecting surroundings of the user.

6. The information processing apparatus according to claim 5,
wherein the various kinds of sensing data include image or audio data obtained by detection performed by a wearable apparatus worn by the user, an information processing terminal carried by the user, or a stationary camera installed around the user.

7. An information presentation method comprising:
selecting at least an item owned by a user as an item that is not to be presented to the user for recommendation, by using a property information storage unit configured to store information on property of the user; and
outputting item recommendation information from which the selected item that is not to be presented for recommendation is excluded.

8. A program for causing a computer to function as:
a selection unit configured to select at least an item owned by a user as an item that is not to be presented to the user for recommendation, by using a property information storage unit configured to store information on property of the user; and
an output unit configured to output item recommendation information from which the selected item that is not to be presented for recommendation is excluded.

9. A system comprising:
a server that includes
a selection unit configured to select at least an item owned by a user as an item that is not to be presented to the user for recommendation, by using a property information storage unit configured to store information on property of the user, and
an output unit configured to output item recommendation information from which the selected item that is not to be presented for recommendation is excluded; and
a client that includes
a communication unit configured to receive item recommendation information corresponding to identification information of a target user, and
a display unit configured to display an item recommendation screen on the basis of the received item recommendation information.
